# EUROPEAN PATENT SPECIFICATION

(11) **EP 3 993 914 B1**
(45) Date of publication and mention of the grant of the patent: **08.04.2026**
(21) Application number: 20740499.7
(22) Date of filing: 09.06.2020
(51) Int. Cl.: C09D 5/18, C09D 1/04, C09D 7/61, B05D 7/00, B05D 7/14, C08K 7/28

(54) **COATING COMPOSITION AND METHOD OF ITS APPLICATION**
BESCHICHTUNGSZUSAMMENSETZUNG UND VERFAHREN ZU DEREN VERWENDUNG
COMPOSITION DE REVÊTEMENT ET PROCÉDÉ POUR SON APPLICATION

(30) Priority: 07.07.2019 CZ 20190449
(43) Date of publication of application: 11.05.2022
(73) Proprietor: First Point A.S., 69501 Hodonín (CZ)
(72) Inventor: CHLANDOVÁ, Gabriela, 51724 Borohrádek (CZ); SPANIEL, Petr, 51771 Ceské Mezirící (CZ)
(74) Representative: Skoda, Milan
(86) International application number: PCT/CZ2020/000025
(87) International publication number: WO 2021/004559

(56) References cited:
- CZ-U1- 30 925
- CZ-U1- 31 269

## Description

### Technical Field

The invention relates to a coating composition, especially to a coating composition intended for thermal insulation of hot metals, which contains an aqueous solution of silicate, and to method of its application.

### State of the Art

There exist several methods how to use a paint to increase thermal endurance of metals known from the state of the arts.

One of the known solutions is the use of foaming intumescent paints the principle of which is based on the increase of their volume by the action of heat during burning at the temperatures exceeding 150°C when the paint creates a several centimetre thick incombustible insulating layer which protects the surface of e.g. a metal load-bearing structure. Their disadvantage is their high price, unascertained service life and complicated renewability of the paint because it is necessary to remove the existing old paint by means of grinding. The biggest disadvantage is, however, the fact that the foaming paint cannot be covered by another structure such as a lining, a partition wall or a ceiling.

There also exist coating compositions based on water glass, e.g. a fire-protecting coating composition based on water glass. This compound known from patent document CS175548 contains 75 to 98 weight percent of soda water glass or potash water glass with the SiO₂to Na₂O molar ratio of 1.8 to 3.5 or with the SiO₂ to K₂O molar ratio of 2.1 to 2.3, with the density of 1.3 to 1.7 at 15°C (with soda water glass) and with the density of 1.3 to 1.4 at 15°C (with potash water glass), and 2 to 25 weight percent of aqueous dispersion of acrylic acid or methacrylic acid poly methyl ester or poly butyl ester with the average polymerization degree 2200 to 4000 and with the polymer-to-water ratio equal to 1:1 to 1:2. A disadvantage of this coating composition is its lower thermal insulating effect and low thermal stability.

The same disadvantage can also be found in a compound to create a protective layer known from the patent document CS PV1989-1840. This compound comprises 25 to 75 weight percent of acidic magnesium metasilicate and 25 to 75 weight percent of water glass. It is suitable for protection of not only metal materials but also of wood as well as cardboards. This mixture is unable to protect the underlying material from extensive heat.

Another patent document CZ PV2002-2407 describes a silicate coating composition containing water glass or a mixture of water glass and silicon dioxide salt in the SiO₂-to-alkali-metal-oxide molar ratio of 5 to 30 moles of SiO₂ per one mole of the alkali metal oxide plus one or more organic ammonia compounds and one or more fillers.

The utility model CZ 31096 U describes a mixture for a glass-based permeable fire-protective expanded insulating material which contains 35 weight percent of porous glass spheres of 1 to 4 mm, 63 weight percent of soda water glass, 1 weight percent of carbon black, and 1 weight percent of hydrophilic alkoxyle alkyl ammonia salt as a water glass stabilizer. A disadvantage of this mixture lies in the fact that it cannot be applied directly on metal because it falls off if the temperature exceeds 100°C.

The utility model CZ 30925 U presents a mixture for a thin-layered thermal insulating and thermo reflexive finish of hot surfaces. This mixture contains 10 to 13 weight percent of hollow glass spheres whose average size is 0.089 mm, 66 to 68 weight percent of potash water glass, 2 to 3 weight percent of lithium water glass, 7 to 12 weight percent of water, 1 weight percent of hydrophilic alkoxyle alkyl ammonia salt as a binder stabilizer, 3 to 5 weight percent of triethanolamine as adhesive additive, 1 weight percent of zirconium oxide as a thermally dilatable filler, 1 weight percent of carbon black as a thermally dilatable filler, 1 weight percent of cut glass fibres of 6 mm in length, 1 weight percent of silicon dioxide nanofibres, and 1 weight percent of a silicone antifoaming agent. Consistence of this mixture resembles a very thick whipped suspension and its adhesion to metal surfaces is not very good. This kind of mixture has insufficient adhesiveness to metals heated to more than 100°C. In general, this material has worse adhesiveness, elasticity and thermal expansion at very high temperatures.

It is obvious from the above existing state of the art (background of the invention) that the main disadvantage of the mixtures know so far is their lower resistance to high temperatures and to heat and their lower adhesion to metal surfaces.

The goal of this invention is to formulate a material to protect metal parts of various structures from high temperatures that is resistant to extensive heat for a long time, whose thermal expansion and adhesion to the underlying material is good even at high temperatures and that has excellent insulating power.

### Principle of the Invention

The aforementioned disadvantages are, to a large extent, eliminated and the goals of the invention accomplished by a coating composition, especially a coating composition for thermal insulation of hot metals which contains an aqueous solution of silicate according to the invention the nature of which consists in the fact that it consists of the first layer containing 35 to 71 volume percent of hollow glass spheres, 26 to 62 volume percent of an aqueous solution of potassium silicate, 1 to 3 volume percent of an adhesive additive, 0.1 volume percent of a water glass stabilizer, and of at least one second layer containing 71 to 84.6 volume percent of hollow glass spheres, 9 to 22.6 volume percent of an aqueous solution of potassium silicate, 0.2 to 0.3 volume percent of an adhesive additive, which is triethanolamine, 0.1 volume percent of a water glass stabilizer, 2 to 3 volume percent of cut glass fibres and 1.7 to 3 volume percent of a styrene-acrylate dispersion. An advantage is that this coating composition has low thermal conductivity and heat permeability and, in addition to that, heat dissipation from the hot surface is minimal. The first layer has, when being applied, exactly such viscosity that it connects itself to the metal surface sufficiently and that it maintains its adhesion and thermal expansion even after being heated to high temperatures. An advantage of the coating composition is the fact that the filler used in the composition is formed from an aqueous solution of potassium silicate (which is of pure inorganic origin), has excellent thermal insulating power, is fungicidal, highly fire- and heat-resistant, has excellent adhesion to all kinds of surfaces, is easy to apply onto the underlying surface and guarantees sufficient hardness and abrasion resistance as well as vapour permeability. After hardening, the material becomes, in effect, potash water glass which is both sea water and fresh water proof, acidic- and base solution proof and protects the metal surface from corrosion. In order to increase elasticity, coherence and thermal expansion of the component with a higher content of glass spheres, a styrene-acrylate dispersion is advantageously used. This dispersion also prevents the silicate filler from being diluted by water but it maintains excellent adhesive power of the composition and increases its quality by creating weak interactions with the polymeric chain of silicates thus facilitating the cross linking process.

It is advantageous if both the layers further contain 1.8 to 7.5 volume percent of water. The advantage of the water being present in the layers lies in the fact that it facilitates application of the composition and increases its thermal insulating power.

It is also very advantageous if both the layers further contain 0.1 to 0.4 volume percent of carbon black. The carbon black serves as a thermally dilatable filler and, at the same time, it blocks UV, IR and visible radiation emitted by the hot metal surface by which it prevents the metal from loss of energy. The carbon black is to be added into the mixture in the form of an aqueous solution the concentration of which is 25 weight percent.

It is also advantageous if the size of the hollow spheres ranges from 0.05 to 0.08 mm. An advantage is a possibility of creating a layer with optimum insulating power.

Triethanolamine is used as the adhesive additive as this additive increases thermal expansion and elasticity of the mixture depending on thermal expansion of the metal surface.

It is also advantageous if hydrophilic alkoxyle alkyl ammonia salt is used as a water glass stabilizer.

It is further advantageous if the density of the aqueous solution of potassium silicate is within the range from 1230 to 1250 kg/m³ and if the ratio of molar weights of silicon dioxide and potassium oxide in the aqueous solution of potassium silicate is within the range from 3.8 to 4.1. The ratio of molar weights of silicon dioxide and potassium oxide and the related density and concentration of the solution have a considerable influence on rheological properties of the water glass as a polymeric mixture, on electrical properties, on compressibility and adhesive power (like with an electrolyte) as well as on hardness and strength.

It is also advantageous if the hollow glass spheres are made of such a material that contains 70 to 80 weight percent of silicon dioxide, 3 to 8 weight percent of sodium oxide, 8 to 16 weight percent of calcium oxide, and 2 to 6 weight percent of boron oxide and if the density of the hollow glass spheres ranges from 0.18 to 0.22 g/cm³. These spheres have very thin walls. They touch each other in individual points, and a great number of sharp material interfaces (boundaries) represents resistance for passage of heat. Such a porous system distinguishes itself by a low heat-transfer coefficient and it acts as an excellent thermal insulating material.

It is also advantageous if the cut fibres are made of alkaline zirconium silicate and if their length ranges from 4 to 10 mm and the diameter from 0.01 to 0.02 mm. These fibres provide sufficient thermal expansion of the coating composition as well as its elasticity and adaptability to the underlying metal surface even at very high temperatures.

The aforementioned drawbacks and disadvantages are, to a large extent, eliminated and the goals of the invention accomplished by a method of application of the coating composition, especially by a method of application of the coating composition that consists of at least one layer containing an aqueous solution of silicate according to the invention whose nature lies in the fact that, as the first step, one layer (first layer) that contains 35 to 71 volume percent of hollow glass spheres, 26 to 62 volume percent of an aqueous solution of potassium silicate, 1 to 3 volume percent of an adhesive additive, which is triethanolamine, and 0.1 volume percent of a water glass stabilizer is applied on a clean surface and then the second layer that contains 71 to 84.6 volume percent of hollow glass spheres, 9 to 22.6 volume percent of an aqueous solution of potassium silicate, 0.2 to 0.3 volume percent of an adhesive additive, which is triethanolamine, 0.1 volume percent of a water glass stabilizer, 2 to 3 volume percent of cut glass fibres and 1.7 to 3 volume percent of a styrene-acrylate dispersion is applied onto the first layer.

Although the first layer itself can act as an independent insulating layer, it is basically (and advantageously) a layer ready to be covered by another layer. An advantage is the fact that the second layer (which is primarily an insulating one) has, owing to the first layer, optimal conditions as for its adhesion and resistance to thermal degradation.

It is also very advantageous if the second layer is applied onto the first layer not earlier than after 24 hours.

It is further advantageous if both the layers are then heated up to the temperature of 100°C to 200°C, most advantageously 24 hours after application.

Nevertheless, the most advantageous method of application is as follows: To apply the first layer and to heat it up to the temperature of 100°C to 200°C after 24 hours for the period of 5 minutes. After the first layer cools down, to apply the second layer and, again, after 24 hours, to heat everything up to the same temperature for the period of 5 minutes. The most advantageous increase of temperature in both cases is 100°C per 10 minutes.

The main advantage of this coating composition and of the method of its application is the fact that it has considerably better insulating power than those coating compositions known from the state of the art and, at the same time, it also has better adhesiveness, elasticity, thermal expansion and compactness even after being heated up. Another advantage is the fact that the coating composition according to this invention can easily be applied on a wide range of materials, not only on metals but also on e.g. walling materials. This coating composition has its excellent thermal insulating powers owing to the exact distribution curve of the glass microspheres eliminating heat passage and mechanically protecting the surface from external effects and corrosion. The coating composition is incombustible, vapour-permeable, resistant to humidity, sufficiently hard and abrasion-resistant. Moreover, it is also environmentally friendly and not dangerous to health. The surface of the coating composition is easy to be ground and covered with a plaster or paint or provided with any kind of lining as it does not change its volume in any considerable way. The durability of the coating composition is good. The coating composition was tested and applied onto a surface of 600°C and its temperature, when touched, was only 50°C.

### Examples of the Performance of the Invention

### Example 1

The coating composition for thermal insulation of hot metals consists of the first layer applied in the thickness of 2 millimetres which contains 48 volume percent of hollow glass spheres, 46.3 volume percent of an aqueous solution of potassium silicate, 1.6 volume percent of an adhesive additive (triethanolamine), 0.1 volume percent of a water glass stabilizer (hydrophilic alkoxyle alkyl ammonia salt), 3.8 volume percent of water, and 0.2 volume percent of carbon black, and of the second 10 millimetre thick layer arranged (applied) on the top of the first layer. The second layer contains 74 volume percent of hollow glass spheres, 15 volume percent of aqueous solution of potassium silicate, 0.2 volume percent of an adhesive additive (triethanolamine), 0.1 volume percent of a water glass stabilizer (hydrophilic alkoxyle alkyl ammonia salt), 2 volume percent of cut glass fibres, 2 volume percent of a styrene-acrylate dispersion, 6.5 volume percent of water, and 0.2 volume percent of carbon black.

Hydrophilic alkoxyle alkyl ammonia salts in the form of 98-percent aqueous solution of N,N,N',N'-Tetrakis (2-hydroxypropyl) ethylene diamine are used as a water glass stabilizer.

The size of the hollow glass spheres is 0.065 mm.

The density of the aqueous solution of potassium silicate is 1240 kg/m³ and the silicon-dioxide-to-potassium-oxide molar weight ratio is 3.9.

The density of the hollow glass spheres is 0.2 g/cm³ and the spheres are made of such a material that contains 75 weight percent of silicon dioxide, 6 weight percent of sodium oxide, 15 weight percent of calcium oxide, and 4 weight percent of boron oxide.

The length of the cut glass fibres is 6 mm, their diameter is 0.015 mm and they are made of alkaline zirconium silicate.

The aforementioned coating composition is to be applied as follows: As the first step, the first layer is applied onto a clean surface. The first layer contains 48 volume percent of hollow glass spheres, 46.3 volume percent of aqueous solution of potassium silicate, 1.6 volume percent of an adhesive additive (triethanolamine), 0.1 volume percent of water glass stabilizer (hydrophilic alkoxyle alkyl ammonia salt), 3.8 volume percent of water, and 0.2 volume percent of carbon black. Then, 24 hours after the first layer being heated up to the temperature of 100°C to 200°C for 5 minutes and cooled down, the second layer is applied onto the first layer. The second layer contains 74 volume percent of hollow glass spheres, 15 volume percent of aqueous solution of potassium silicate, 0.2 volume percent of an adhesive additive (triethanolamine), 0.1 volume percent of water glass stabilizer (hydrophilic alkoxyle alkyl ammonia salt), 2 volume percent of cut glass fibres, 2 volume percent of a styrene-acrylate dispersion, 6.5 volume percent of water, and 0.2 volume percent of carbon black.

Then, after 24 hours, both the layers are heated up to the temperature of 100°C to 200°C for the period of 5 minutes.

After both the layers cool down, the surface is to be ground and covered with a coat of paint.

### Example 2

The coating composition for thermal insulation of hot metals consists of the first layer applied in the thickness of 1 millimetre which contains 65 volume percent of hollow glass spheres, 26.5 volume percent of an aqueous solution of potassium silicate, 2.2 volume percent of an adhesive additive (triethanolamine), 0.1 volume percent of a water glass stabilizer (hydrophilic alkoxyle alkyl ammonia salt), 5.8 volume percent of water, and 0.4 volume percent of carbon black, and of the second 5 millimetre thick layer arranged (applied) on the top of the first layer. The second layer contains 78 volume percent of hollow glass spheres, 9 volume percent of aqueous solution of potassium silicate, 0.2 volume percent of an adhesive additive (triethanolamine), 0.1 volume percent of a water glass stabilizer (hydrophilic alkoxyle alkyl ammonia salt), 2 volume percent of cut glass fibres, 3 volume percent of a styrene-acrylate dispersion, 7.5 volume percent of water, and 0.2 volume percent of carbon black.

Hydrophilic alkoxyle alkyl ammonia salts in the form of 98-percent aqueous solution of N,N,N',N'-Tetrakis (2-hydroxypropyl) ethylene diamine are used as a water glass stabilizer.

The size of the hollow glass spheres is 0.065 mm.

The density of the aqueous solution of potassium silicate is 1230 kg/m³ and the silicon-dioxide-to-potassium-oxide molar weight ratio is 3.8.

The density of the hollow glass spheres is 0.18 g/cm³ and the spheres are made of such a material that contains 75 weight percent of silicon dioxide, 6 weight percent of sodium oxide, 15 weight percent of calcium oxide, and 4 weight percent of boron oxide.

The length of the cut glass fibres is 4 mm and their diameter is 0.01 mm and they are made of alkaline zirconium silicate.

The aforementioned coating composition is to be applied as follows: As the first step, the first layer is applied onto a clean surface. The first layer contains 65 volume percent of hollow glass spheres, 26.5 volume percent of aqueous solution of potassium silicate, 2.2 volume percent of an adhesive additive (triethanolamine), 0.1 volume percent of water glass stabilizer (hydrophilic alkoxyle alkyl ammonia salt), 5.8 volume percent of water, and 0.4 volume percent of carbon black. Then, 24 hours after the first layer being heated up to the temperature of 100°C to 200°C for 5 minutes and cooled down, the second layer is applied onto the first layer. The second layer contains 78 volume percent of hollow glass spheres, 9 volume percent of aqueous solution of potassium silicate, 0.2 volume percent of an adhesive additive (triethanolamine), 0.1 volume percent of water glass stabilizer (hydrophilic alkoxyle alkyl ammonia salt), 2 volume percent of cut glass fibres, 3 volume percent of a styrene-acrylate dispersion, 7.5 volume percent of water, and 0.2 volume percent of carbon black.

Then, after 24 hours, both the layers are heated up to the temperature of 100°C to 200°C for the period of 5 minutes.

After both the layers cool down, the surface is to be ground and covered with a coat of paint.

### Example 3

The coating composition for thermal insulation of hot metals consists of the first layer applied in the thickness of 3 millimetres which contains 35 volume percent of hollow glass spheres, 62 volume percent of an aqueous solution of potassium silicate, 1 volume percent of an adhesive additive (triethanolamine), 0.1 volume percent of a water glass stabilizer (hydrophilic alkoxyle alkyl ammonia salt), 1.8 volume percent of water, and 0.1 volume percent of carbon black, and of the second 10 millimetre thick layer arranged (applied) on the top of the first layer. The second layer contains 71 volume percent of hollow glass spheres, 18 volume percent of aqueous solution of potassium silicate, 0.3 volume percent of an adhesive additive (triethanolamine), 0.1 volume percent of water glass stabilizer (hydrophilic alkoxyle alkyl ammonia salt), 3 volume percent of cut glass fibres, 1.7 volume percent of a styrene-acrylate dispersion, 5.5 volume percent of water, and 0.4 volume percent of carbon black.

Hydrophilic alkoxyle alkyl ammonia salts in the form of 98-percent aqueous solution of N,N,N',N'-Tetrakis (2-hydroxypropyl) ethylene diamine are used as a water glass stabilizer.

The size of the hollow glass spheres is 0.065 mm.

The density of the aqueous solution of potassium silicate is 1250 kg/m³ and the silicon-dioxide-to-potassium-oxide molar weight ratio is 4.1.

The density of the hollow glass spheres is 0.18 g/cm³ and the spheres are made of such a material that contains 75 weight percent of silicon dioxide, 6 weight percent of sodium oxide, 15 weight percent of calcium oxide, and 4 weight percent of boron oxide.

The length of the cut glass fibres is 10 mm, their diameter is 0.02 mm and they are made of alkaline zirconium silicate.

The aforementioned coating composition is to be applied as follows: As the first step, the first layer is applied onto a clean surface. The first layer contains 35 volume percent of hollow glass spheres, 62 volume percent of aqueous solution of potassium silicate, 1 volume percent of an adhesive additive (triethanolamine), 0.1 volume percent of water glass stabilizer (hydrophilic alkoxyle alkyl ammonia salt), 1.8 volume percent of water, and 0.1 volume percent of carbon black. Then, 24 hours after the first layer being heated up to the temperature of 100°C to 200°C for 5 minutes and cooled down, the second layer is applied onto the first layer. The second layer contains 71 volume percent of hollow glass spheres, 18 volume percent of aqueous solution of potassium silicate, 0.3 volume percent of an adhesive additive (triethanolamine), 0.1 volume percent of water glass stabilizer (hydrophilic alkoxyle alkyl ammonia salt), 3 volume percent of cut glass fibres, 1.7 volume percent of a styrene-acrylate dispersion, 5.5 volume percent of water, and 0.4 volume percent of carbon black.

Then, after 24 hours, both the layers are heated up to the temperature of 100°C to 200°C for the period of 5 minutes.

After both the layers cool down, the surface is to be ground and covered with a coat of paint.

### Industrial Application

The coating composition according to this invention can especially be used for thermal protection of hot metal surfaces, e.g. for thermal protection of surfaces of steam pipelines, flue pipes, furnaces, refrigeration plants ,and heating, ventilation and air conditioning devices.

## Claims

1. A coating composition, especially a coating composition intended for thermal insulation of hot metals, which contains an aqueous solution of silicate **characterized in that** the composition consists of the first layer containing 35 to 71 volume percent of hollow glass spheres, 26 to 62 volume percent of an aqueous solution of potassium silicate, 1 to 3 volume percent of an adhesive additive, and 0,1 volume percent of water glass stabilizer, and of at least one second layer containing 71 to 84.6 volume percent of hollow glass spheres, 9 to 22.6 volume percent of an aqueous solution of potassium silicate, 0.2 to 0.3 volume percent of an adhesive additive, which is triethanolamine, 0.1 volume percent of water glass stabilizer, 2 to 3 volume percent of cut glass fibres, and 1.7 to 3 volume percent of a styrene-acrylate dispersion.

2. The coating composition according to claim 1 **characterized in that** the individual layers further contain 1.8 to 7.5 volume percent of water.

3. The coating composition according to any one of claims 1 to 2 **characterized in that** the layers further contain 0.1 to 0.4 volume percent of carbon black.

4. The coating composition according to any one of claims 1 to 3 **characterized in that** the size of the hollow glass spheres ranges from 0.05 to 0.08 mm.

5. The coating composition according to any one of claims 1 to 4 **characterized in that** the water glass stabilizer is hydrophilic alkoxyle alkyl ammonia salt.

6. The coating composition according to any one of claims 1 to 5 **characterized in that** the density of the aqueous solution of potassium silicate ranges from 1230 to 1250 kg/m³.

7. The coating composition according to any one of claims 1 to 6 **characterized in that** the silicon-dioxide-to-potassium-oxide molar weight ratio in the aqueous solution of potassium silicate ranges from 3.8 to 4.1.

8. The coating composition according to any one of claims 1 to 7 **characterized in that** the hollow glass spheres are made of such a material that contains 70 to 80 weight percent of silicon dioxide, 3 to 8 weight percent of sodium oxide, 8 to 16 weight percent of calcium oxide, and 2 to 6 weight percent of boron oxide.

9. The coating composition according to any one of claims 1 to 8 **characterized in that** the density of the hollow glass spheres ranges from 0.18 to 0.22 g/cm³.

10. The coating composition according to any one of claims 1 to 9 **characterized in that** the cut glass fibres are made of alkaline zirconium silicate.

11. The coating composition according to any one of claims 1 to 10 **characterized in that** the length of the cut glass fibres ranges from 4 to 10 mm and their diameter ranges from 0.01 to 0.02 mm.

12. A method of application of the coating composition, especially method of application of the coating composition which consists of at least one layer containing an aqueous solution of silicate according to some of the previous claims **characterized in that,** as the first step, the first layer containing 35 to 71 volume percent of the hollow glass spheres, 26 to 62 volume percent of the aqueous solution of potassium silicate, 1 to 3 volume percent of the adhesive additive, which is triethanolamine, and 0.1 volume percent of water glass stabilizer, is applied onto the underlying surface and then the second layer containing 71 to 84.6 volume percent of the hollow glass spheres, 9 to 22.6 volume percent of the aqueous solution of potassium silicate, 0.2 to 0.3 volume percent of the adhesive additive, which is triethanolamine, 0.1 volume percent of the water glass stabilizer, 2 to 3 volume percent of the cut glass fibres, and 1.7 to 3 volume percent of the styrene-acrylate dispersion is applied onto the first layer.

13. The method of application of the coating composition according to claim 12 **characterized in that** the second layer is applied onto the first layer not earlier than after 24 hours.

14. The method of application of the coating composition according to claim 13 **characterized in that** the both the layers are then heated up to the temperature of 100°C to 200°C.

15. The method of application of the coating composition according to claim 13 **characterized in that** the both the layers are then heated up to the temperature of 100°C to 200°C not earlier than after 24 hours.

## Patentansprüche

1. Beschichtungsstoff, insbesondere der Beschichtungsstoff für die Wärmedämmung heißer Metalle, der eine wässrige Silikatlösung enthält, **dadurch gekennzeichnet, dass** dieser eine erste Schicht enthält, die 35 bis 71 Vol.-% hohle Glaskugeln, 26 bis 62 Vol.-% einer wässrigen Kaliumsilikatlösung, 1 bis 3 Vol.-% eines Haftadditivs und 0,1 Vol.-% eines Wasserglasstabilisators enthält, und mindestens eine zweite Schicht, die 71 bis 84,6 Vol.-% hohle Glaskugeln, 9 bis 22,6 Vol.-% einer wässrigen Kaliumsilikatlösung, 0,2 bis 0,3 Vol.-% eines Haftadditivs, bei dem es sich um Triethanolamin handelt,0,1 Vol.-% eines Wasserglasstabilisators, 2 bis 3 Vol.-% Glasfaserschnitzel und 1,7 bis 3 Vol.-% Styrol-Acrylat-Dispersion enthält.

2. Beschichtungsstoff gemäß Anspruch 1, **dadurch gekennzeichnet, dass** die Schichten außerdem 1,8 bis 7,5 Vol.-% Wasser enthalten.

3. Beschichtungsstoff nach einem der Ansprüche 1 bis 2, **dadurch gekennzeichnet, dass** die Schichten außerdem 0,1 bis 0,4 Vol.-% Ruß enthalten.

4. Beschichtungsstoff gemäß einem der Ansprüche 1 bis 3, **dadurch gekennzeichnet, dass** die hohlen Glaskugeln eine Größe von 0,05 bis 0,08 mm haben.

5. Beschichtungsstoff gemäß einem der Ansprüche 1 bis 4, **dadurch gekennzeichnet, dass** der Wasserglasstabilisator ein hydrophiles Alkoxy-Alkylammoniumsalz ist.

6. Beschichtungsstoff gemäß einem der Ansprüche 1 bis 5, **dadurch gekennzeichnet, dass** die wässrige Kaliumsilikatlösung eine Dichte im Bereich von 1230 bis 1250 kg/m³ aufweist.

7. Beschichtungsstoff gemäß einem der Ansprüche 1 bis 6, **dadurch gekennzeichnet, dass** die wässrige Kaliumsilikatlösung eine Molmassenverteilung von Siliziumdioxid und Kaliumoxid im Bereich von 3,8 bis 4,1 hat.

8. Beschichtungsstoff gemäß einem der Ansprüche 1 bis 7, **dadurch gekennzeichnet, dass** die hohlen Glaskugeln aus einem Material bestehen, das 70 bis 80 Gew.-% Siliziumdioxid, 3 bis 8 Gew.-% Natriumoxid, 8 bis 16 Gew.-% Calciumoxid und 2 bis 6 Gew.-% Boroxid enthält.

9. Beschichtungsstoff gemäß einem der Ansprüche 1 bis 8, **dadurch gekennzeichnet, dass** die hohlen Glaskugeln eine Dichte im Bereich von 0,18 bis 0,22 g/cm³ aufweisen.

10. Beschichtungsstoff gemäß einem der Ansprüche 1 bis 9, **dadurch gekennzeichnet, dass** die Glasfaserschnitzel aus einem Material bestehen, das alkalisches Zirconiumsilicat ist.

11. Beschichtungsstoff gemäß einem der Ansprüche 1 bis 10, **dadurch gekennzeichnet, dass** die Glasfaserschnitzel eine Länge von 4 bis 10 mm und einen Durchmesser von 0,01 bis 0,02 mm aufweisen.

12. Verfahren zum Auftragen des Beschichtungsstoffs, insbesondere das Verfahren zum Auftragen eines Beschichtungsstoffs, der mindestens eine Schicht enthält, die eine wässrige Silikatlösung gemäß einem der vorstehenden Ansprüche enthält, **dadurch gekennzeichnet, dass** zunächst eine erste Schicht auf den Untergrund aufgetragen wird, die 35 bis 71 Vol.-% hohle Glaskugeln, 26 bis 62 Vol.-% einer wässrigen Kaliumsilikatlösung, 1 bis 3 Vol.-% eines Haftadditivs, bei dem es sich um Triethanolamin handelt, und 0,1 Vol.-% eines Wasserglasstabilisators enthält, anschließend wird auf die erste Schicht eine zweite Schicht aufgetragen, die 71 bis 84,6 Vol.-% hohle Glaskugeln, 9 bis 22,6 Vol.-% wässrige Kaliumsilikatlösung, 0,2 bis 0,3 Vol.-% eines Haftadditivs, bei dem es sich um Triethanolamin handelt, 0,1 Vol.-% eines Wasserglasstabilisators, 2 bis 3 Vol.-% Glasfaserschnitzel und 1,7 bis 3 Vol.-% Styrol-Acrylat-Dispersion enthält.

13. Verfahren zum Auftragen des Beschichtungsstoffs gemäß Anspruch 12, **dadurch gekennzeichnet, dass** die zweite Schicht mit einem Abstand von mindestens 24 Stunden auf die erste Schicht aufgetragen wird.

14. Verfahren zum Auftragen des Beschichtungsstoffs gemäß Anspruch 13, **dadurch gekennzeichnet, dass** beide Schichten anschließend auf eine Temperatur von 100°C bis 200°C erhitzt werden.

15. Verfahren zum Auftragen des Beschichtungsstoffs gemäß Anspruch 13, **dadurch gekennzeichnet, dass** beide Schichten anschließend mit einem Abstand von mindestens 24 Stunden auf eine Temperatur von 100 °C bis 200°C erhitzt werden.

## Revendications

1. Composition de revêtement, notamment une composition de revêtement destinée à l'isolation thermique de métaux chauds, comprenant une solution aqueuse de silicate, **caractérisée en ce qu'**elle comprend une première couche, comprenant de 35 à 71 % en volume de microsphères de verre creuses, de 26 à 62 % en volume d'une solution aqueuse de silicate de potassium, de 1 à 3 % en volume d'un additif adhésif, et 0,1 % en volume d'un stabilisateur du verre soluble, et au moins une seconde couche comprenant de 71 à 84,6 % en volume de microsphères de verre creuses, de 9 à 22,6 % en volume d'une solution aqueuse de silicate de potassium, de 0,2 à 0,3 % en volume d'un additif adhésif, qui est la triéthanolamine, 0,1 % en volume d'un stabilisateur du verre soluble, de 2 à 3 % en volume de fibres de verre hachées et de 1,7 à 3 % en volume d'une dispersion styrène-acrylate.

2. Composition de revêtement selon la revendication 1, **caractérisée en ce que** les couches contiennent en outre de 1,8 à 7,5 % en volume d'eau.

3. Composition de revêtement selon l'une des revendications 1 ou 2, **caractérisée en ce que** les couches contiennent en outre de 0,1 à 0,4 % en volume de noir de carbone.

4. Composition de revêtement selon l'une des revendications 1 à 3, **caractérisée en ce que** les microsphères de verre creuses ont une taille comprise entre 0,05 et 0,08 mm.

5. Composition de revêtement selon l'une des revendications 1 à 4, **caractérisée en ce que** le stabilisateur du verre soluble est un sel alkylammonium alkoxylé hydrophile.

6. Composition de revêtement selon l'une des revendications 1 à 5, **caractérisée en ce que** la solution aqueuse de silicate de potassium présente une densité comprise entre 1230 et 1250 kg/m³.

7. Composition de revêtement selon l'une des revendications 1 à 6, **caractérisée en ce que** la solution aqueuse de silicate de potassium présente un rapport des masses molaires de l'oxyde de silicium et de l'oxyde de potassium compris entre 3,8 et 4,1.

8. Composition de revêtement selon l'une des revendications 1 à 7, **caractérisée en ce que** les microsphères de verre creuses sont constituées d'un matériau comprenant de 70 à 80 % en masse d'oxyde de silicium, de 3 à 8 % en masse d'oxyde de sodium, de 8 à 16 % en masse d'oxyde de calcium, et de 2 à 6 % en masse d'oxyde de bore.

9. Composition de revêtement selon l'une des revendications 1 à 8, **caractérisée en ce que** les microsphères de verre creuses présentent une densité comprise entre 0,18 et 0,22 g/cm³.

10. Composition de revêtement selon l'une des revendications 1 à 9, **caractérisée en ce que** les fibres de verre hachées sont constituées d'un matériau qui est un silicate de zirconium alcalin.

11. Composition de revêtement selon l'une des revendications 1 à 10, **caractérisée en ce que** les fibres de verre hachées ont une longueur comprise entre 4 et 10 mm et un diamètre compris entre 0,01 et 0,02 mm.

12. Procédé d'application d'une composition de revêtement, notamment d'une composition de revêtement comprenant au moins une couche contenant une solution aqueuse de silicate, selon l'une quelconque des revendications précédentes, **caractérisé en ce que** l'on applique d'abord sur le support une première couche comprenant de 35 à 71 % en volume de microsphères de verre creuses, de 26 à 62 % en volume d'une solution aqueuse de silicate de potassium, de 1 à 3 % en volume d'un additif adhésif, qui est la triéthanolamine, et 0,1 % en volume d'un stabilisateur du verre soluble, puis l'on applique sur la première couche une seconde couche comprenant de 71 à 84,6 % en volume de microsphères de verre creuses, de 9 à 22,6 % en volume d'une solution aqueuse de silicate de potassium, de 0,2 à 0,3 % en volume d'un additif adhésif, qui est la triéthanolamine, 0,1 % en volume d'un stabilisateur du verre soluble, de 2 à 3 % en volume de fibres de verre hachées et de 1,7 à 3 % en volume d'une dispersion styrène-acrylate.

13. Procédé d'application de la composition de revêtement selon la revendication 12, **caractérisé en ce que** la seconde couche est appliquée sur la première couche après un délai d'au moins 24 heures.

14. Procédé d'application de la composition de revêtement selon la revendication 13, **caractérisé en ce que** les deux couches sont ensuite chauffées à une température comprise entre 100 °C et 200 °C.

15. Procédé d'application de la composition de revêtement selon la revendication 13, **caractérisé en ce que** les deux couches sont ensuite chauffées à une température comprise entre 100 °C et 200 °C après un délai d'au moins 24 heures.
